# EUROPEAN PATENT APPLICATION

(11) **EP 4 156 820 A1**
(43) Date of publication of application: **29.03.2023**
(21) Application number: 21821905.3
(22) Date of filing: 11.06.2021
(51) Int. Cl.: H04W 72/04, H04W 84/06

(54) **INFORMATION INDICATION METHOD FOR NON-TERRESTRIAL COMMUNICATION NETWORK, AND DEVICE**

(30) Priority: 12.06.2020 CN 202010537507
(71) Applicant: Huawei Technologies Co., Ltd., Longgang District, Shenzhen, Guangdong 518129 (CN)
(72) Inventor: WANG, Xiaolu, Shenzhen, Guangdong 518129 (CN); LUO, Hejia, Shenzhen, Guangdong 518129 (CN); QIAO, Yunfei, Shenzhen, Guangdong 518129 (CN); LI, Rong, Shenzhen, Guangdong 518129 (CN); WANG, Jun, Shenzhen, Guangdong 518129 (CN)
(74) Representative: Gill Jennings & Every LLP
(86) International application number: PCT/CN2021/099627
(87) International publication number: WO 2021/249530

(57) **Abstract**

This application relates to the non-terrestrial communication technologies, and discloses an information indication method and apparatus. The method includes: A first communication apparatus receives bandwidth part BWP configuration information, where the BWP configuration information indicates a correspondence between a plurality of pieces of first field information and a plurality of initial BWP configurations. After determining updated first field information, the apparatus determines an updated initial BWP configuration based on the updated first field information and the BWP configuration information. The updated first field information corresponds to the updated initial BWP configuration. After undergoing beam switching, the first communication apparatus cannot be successfully re-connected to a system if communication is interrupted.

## Description

This application claims priority to Chinese Patent Application No. 202010537507.6, filed with the China National Intellectual Property Administration on June 12, 2020, and entitled "INFORMATION INDICATION METHOD FOR NON-TERRESTRIAL COMMUNICATION NETWORK AND APPARATUS", which is incorporated herein by reference in its entirety.

### TECHNICAL FIELD

Embodiments of the present invention relate to the field of wireless communication technologies, and in particular, to an information indication method for a non-terrestrial communication network and an apparatus.

### BACKGROUND

In recent years, application of information technologies is further affecting a development direction of the human society. An information communication network is also changing from a fixed network to a mobile network, and from a network that isolates the ground and the space from each other to a space-ground integrated network. The space-ground integrated network is a major information infrastructure that expands human activities to space, far seas, and even deep space. The space-ground integrated network can adapt to transformation needs of economic and social development manners and development needs of information technologies, and is an emphasis, a focus, and a direction of development of information technologies, information industries, information networks, and informatization. A non-terrestrial communication network NTN is an important part of the space-ground integrated network. The NTN includes satellite communication, air-to-ground (Air-to-Ground, ATG) communication, and the like. A user terminal (User Equipment, UE) can be connected to the network anytime and anywhere for communication.

The satellite communication is an important part of non-terrestrial communication. Standardization organizations such as the 3rd Generation Partnership Project (3GPP, 3rd Generation Partnership Project) and the International Telecommunication Union (ITU, International Telecommunication Union) have successively carried out research and discussion on space-ground integrated satellite communication standards. Based on different orbital altitudes, satellite communication systems may be classified into the following three types: a geostationary earth orbit (Geostationary Earth Orbit, GEO) satellite communication system, a medium earth orbit (Medium Earth Orbit, MEO) satellite communication system, and a low earth orbit (Low Earth Orbit, LEO) satellite communication system. A GEO satellite is generally referred to as a geostationary orbit satellite with an orbital altitude of 35786 km, and main advantages of the GEO satellite are being stationary relative to the ground and providing a quite large coverage area. However, the GEO satellite also has relatively prominent shortcomings: For example, an antenna with a large aperture is required, and a requirement on performance of a terminal device is high; the satellite is far away from the earth, and a long transmission delay of approximately 270 milliseconds cannot meet a requirement of a real-time service. In addition, orbital resources of the GEO satellite are relatively insufficient, launch costs are high, and polar regions cannot be covered. An orbital altitude of a MEO satellite ranges from 2000 km to 35786 km. With a relatively small quantity of satellites, global coverage can be implemented. A transmission delay of the MEO satellite is shorter than that of the GEO satellite and longer than that of a LEO satellite. The MEO satellite is mainly applied to positioning and navigation. A satellite with an orbital altitude of 300 km to 2000 km is referred to as a low earth orbit (LEO) satellite. Compared with the MEO satellite and the GEO satellite, the LEO satellite has a lower orbital altitude, a shorter corresponding data propagation delay, a smaller power loss, lower launch costs, but a smaller coverage area.

To prevent the UE from frequently performing satellite cell handover, one cell generally includes a plurality of satellite beams of a satellite. It is stipulated in the conventional technology that an initial bandwidth part (initial bandwidth part, initial BWP) configured in a system needs to be consistent with a master information block (Master Information Block, MIB) or a system information block (System Information Block, SIB 1) in one cell. After the UE is connected to the satellite communication system from a beam, when the satellite or the UE moves and the UE enters another beam from one beam, beam switching (beam switch) occurs. After beam switching occurs on the UE, due to settings of a current protocol, if the UE is disconnected, the UE may be unable to apply on the initial BWP for connecting to the system.

### SUMMARY

This application provides an information indication method for a non-terrestrial communication network and an apparatus, to resolve a technical problem that after a terminal apparatus undergoes beam switching, the terminal is disconnected and cannot send a preamble on an initial BWP to apply for connecting to a system.

The following describes this application in a plurality of aspects. It is easily understood that implementations of the aspects can refer to each other.

According to a first aspect, this application provides an information indication method. The method includes: A first communication apparatus receives bandwidth part BWP configuration information. The BWP configuration information indicates a correspondence between a plurality of pieces of first field information and a plurality of initial BWP configurations, and the first field information indicates different beams. The first communication apparatus determines updated first field information. The first communication apparatus determines an updated initial BWP configuration based on the updated first field information and the BWP configuration information. The updated first field information corresponds to the updated initial BWP configuration. Based on the method, a problem that during NTN communication, after undergoing beam switching, the first communication apparatus cannot be re-connected to a system if the communication is interrupted is resolved, thereby ensuring that the first communication apparatus can be successfully re-connected to the system after the first communication apparatus is disconnected or the communication is interrupted.

In a possible implementation, the initial BWP configuration includes a BWP frequency domain location and a bandwidth parameter, or a carrier offset, or reference point information.

In a possible implementation, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

In a possible implementation, the updated first field information includes first field information after beam switching or first field information after BWP switching.

In a possible implementation, the frequency band information indirectly or directly indicates a quantity of frequency bands, and the quantity of frequency bands is equal to a frequency reuse factor.

In a possible implementation, that the first communication apparatus determines updated first field information includes: The first communication apparatus determines the BWP frequency band information based on a used uplink frequency band range or a used downlink frequency band range.

In a possible implementation, the method further includes: The first communication apparatus determines a frequency band location and a bandwidth parameter of an updated initial BWP based on the reference point information.

In a possible implementation, the method further includes: The first communication apparatus sends preamble information carried on a first initial BWP. The first initial BWP is determined based on the updated initial BWP configuration.

In a possible implementation, the first field information includes BWP frequency band information, a resource block parameter, a beam identifier, a synchronization signal block SSB number, or a transmission configuration indicator TCI.

According to a second aspect, this application provides an information indication method. The method includes: A second communication apparatus sends bandwidth part BWP configuration information. The BWP configuration information indicates a correspondence between a plurality of pieces of first field information and a plurality of initial BWP configurations. The first field information is in a one-to-one correspondence with the initial BWP configurations, and indicates different beams.

In a possible implementation, the method includes: The second communication apparatus receives preamble information carried on a first initial BWP. The first initial BWP is determined based on the BWP configuration information.

In a possible implementation, the initial BWP configuration includes a BWP frequency domain location and a bandwidth parameter, or a carrier offset, or reference point information.

In a possible implementation, the first field information includes BWP frequency band information, a resource block parameter, a beam identifier, a synchronization signal block SSB number, or a transmission configuration indicator TCI.

In a possible implementation, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

In a possible implementation, the updated first field information includes first field information after beam switching or first field information after BWP switching.

In a possible implementation, the frequency band information indirectly or directly indicates a quantity of frequency bands, and the quantity of frequency bands is equal to a frequency reuse factor.

According to a third aspect, this application provides a communication apparatus. The apparatus includes a processor and a memory. The processor and the memory are electrically coupled. The memory is configured to store computer program instructions. The processor is configured to execute some or all of the computer program instructions in the memory. When the some or all of the computer program instructions are executed, the information indication method in any one of the first aspect or the possible implementations of the first aspect is performed, or the information indication method in any one of the second aspect or the possible implementations of the second aspect is performed.

In a possible implementation, a transceiver is further included, and is configured to send a signal processed by the processor, or receive a signal and input the signal to the processor

According to a fourth aspect, this application further provides a computer-readable storage medium. Computer-readable instructions are stored in the computer storage medium. When a computer reads and executes the computer-readable instructions, the information indication method in any one of the first aspect or the possible implementations of the first aspect is performed, or the information indication method in any one of the second aspect or the possible implementations of the second aspect is performed.

According to a fifth aspect, this application provides a computer program product including computer program code. When the computer program code is run on a computer, the information indication method in any one of the first aspect or the possible implementations of the first aspect is performed, or the information indication method in any one of the second aspect or the possible implementations of the second aspect is performed.

According to a sixth aspect, a communication system is provided. The system may include the first communication apparatus performing the method in any one of the first aspect or the possible implementations of the first aspect, and the second communication apparatus performing the method in any one of the second aspect or the possible implementations of the second aspect.

### BRIEF DESCRIPTION OF DRAWINGS

To describe the technical solutions in embodiments of the present invention or in the conventional technology more clearly, the following briefly describes the accompanying drawings for describing the background and embodiments. It is clear that the accompanying drawings in the following description show merely some embodiments of the present invention, and a person of ordinary skill in the art may still derive other accompanying drawings or embodiments according to these drawings or description without creative efforts, and the present invention aims to cover all these derived accompanying drawings or embodiments.
FIG. 1 is a schematic diagram of a scenario of a wireless communication network to which the solutions provided in embodiments of this application are applicable;
FIG. 2 is a schematic diagram of a location relationship between an SSB and a point A according to an embodiment of this application;
FIG. 3 is a schematic diagram of a relationship between an initial BWP frequency band and a point A according to an embodiment of this application;
FIG. 4 is a schematic diagram of a satellite communication network with a frequency reuse factor of 3 according to an embodiment of this application;
FIG. 5 is a schematic diagram of an information indication method applicable to a non-terrestrial communication network according to an embodiment of this application;
FIG. 6 is a schematic diagram of another information indication method applicable to a non-terrestrial communication network according to an embodiment of this application;
FIG. 7 is a schematic diagram of an embodiment of an information indication method based on a relationship between a frequency band and an initial BWP configuration according to this application;
FIG. 8 is a schematic diagram of an embodiment of an information indication method based on a relationship between a beam group and an initial BWP configuration according to this application;
FIG. 9 is a schematic diagram of an embodiment of an information indication method based on a relationship between a point A configuration and a frequency band range according to this application;
FIG. 10 is a schematic diagram of an embodiment of an information indication method based on a relationship between a beam group and a point A configuration according to this application;
FIG. 11 is a schematic block diagram of another communication apparatus 1100 according to an embodiment of this application;
FIG. 12 is a schematic block diagram of another communication apparatus 1200 according to an embodiment of this application;
FIG. 13 is a schematic block diagram of another communication apparatus 1300 according to an embodiment of this application; and
FIG. 14 is a schematic block diagram of another communication apparatus 1400 according to an embodiment of this application.

### DESCRIPTION OF EMBODIMENTS

In the specification, claims, and accompanying drawings of this application, the terms "first", "second", "third", "fourth" and so on are intended to distinguish between different objects but do not indicate a particular order. In addition, terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" indicates one or more, "a plurality of" indicates two or more, "at least two (items)" indicates two or three or more than three, "and/or" is used to describe an association relationship between associated objects, and indicates that three relationships may exist. For example, "A and/or B" may indicate three cases: Only A exists, only B exists, and both A and B exist, where A and B may be singular or plural. The character "/" usually indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Before specific solutions are described, a scenario to which the solutions provided in embodiments of this application are applicable and related technologies are briefly described first.

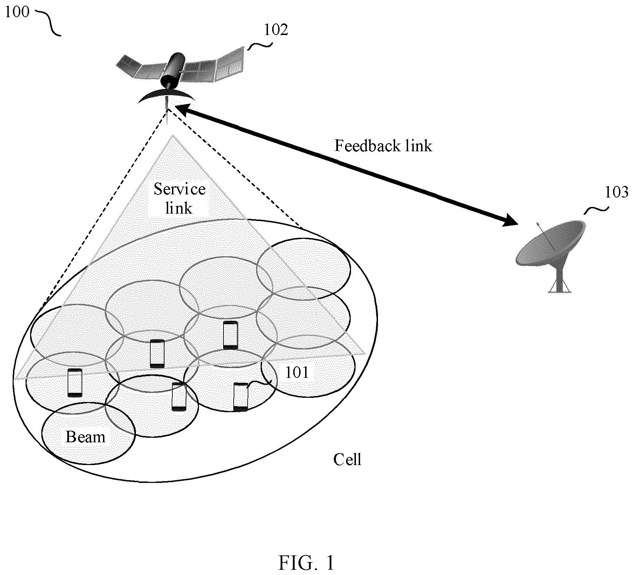

FIG. 1 is a schematic diagram of a scenario of a wireless communication network to which the solutions provided in embodiments of this application are applicable. The solutions provided in this application may be applied to an NTN communication system. As shown in FIG. 1, the communication system 100 may include a terminal device 101, a satellite (or a satellite base station) 102, and a ground station (or a gateway station or a gateway station) (gateway) 103.

The terminal device 101 may also be referred to as user equipment (user equipment, UE), a terminal, a terminal apparatus, or the like. The terminal device is a device, chip, or communication system with a wireless transceiver function, and may be deployed on land, including being indoors or outdoors, handheld, wearable, or vehicle-mounted, may be deployed on a water surface, for example, on a ship, or may be deployed in the air, for example, deployed on a plane, on a balloon, or on a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may be alternatively a terminal device in a future 5G network, a terminal device in a future evolved public land mobile network (public land mobile network, PLMN), or the like. For ease of description, a method used in an embodiment of this application is described below by using an example in which the terminal device is the UE.

Optionally, in the communication system shown in FIG. 1, terminal devices may communicate with each other by using a communication technology, such as a device-to-device (device-to-device, D2D) communication technology, a vehicle-to-everything (vehicle-to-everything, V2X) communication technology, or a machine-to-machine (machine-to-machine, M2M) communication technology. A method for performing communication between terminal devices is not limited in this embodiment of this application.

The satellite 102 can provide a wireless access service for the terminal device, schedule a radio resource for an accessed terminal device, provide a reliable wireless transmission protocol and data encryption protocol, and so on. The satellite may be a base station that uses an artificial earth satellite, a high-altitude aircraft, and the like for wireless communication, such as an evolved NodeB (evolved NodeB, eNB) and a 5G NodeB (gNB). Alternatively, the satellite may have a relay and forwarding function, to transparently (transparent) transmit wireless signals of the base stations to the terminal device. In this case, the ground station may be considered as a base station for wireless communication. Therefore, in some embodiments, for example, in a regenerative scenario of the satellite, a network device may be the satellite base station shown in FIG. 1; and in some other embodiments, for example, in a transparent transmission scenario of the satellite, the network device may be the ground station shown in FIG. 1. For ease of description, the method used in this application is described below by using an example in which the network device is a base station.

A satellite beam refers to a shape formed on a surface of the earth by an electromagnetic wave emitted by a satellite antenna. The satellite beam has a specific range, just like a beam of a flashlight. Alternatively, a signal transmitted by the satellite is not radiated by 360°, but intensively transmitted at an azimuth as a signal wave.

In the embodiments provided in this application, the network device may include, but is not limited to, the satellite base station shown above. For example, the network device may be alternatively a base station in a future communication system, for example, a sixth-generation communication system. Optionally, the network device may be alternatively an access node, a wireless relay node, a wireless backhaul node, or the like in a wireless local area network (wireless fidelity, Wi-Fi) system. Optionally, the network device may be alternatively a wireless controller in a cloud radio access network (cloud radio access network, CRAN) scenario. Optionally, the network device may be alternatively a wearable device, a vehicle-mounted device, or the like. Optionally, the network device may be alternatively a small cell, a transmission point (transmission reception point, TRP) (or may be referred to as a transmission reception point), or the like. It may be understood that the network device may be alternatively a base station in a future evolved PLMN, or the like.

Optionally, the satellite 102 may be a geostationary earth orbit (geostationary earth orbit, GEO) satellite, a medium earth orbit (medium earth orbit, MEO) satellite and a low earth orbit (low earth orbit, LEO) satellite on a non-geostationary earth orbit (non-geostationary earth orbit, NGEO), a high altitude platform station (High Altitude Platform Station, HAPS), or the like.

The ground station 103 can be used to connect the satellite and a core network. For example, when the satellite serves as the base station for wireless communication, the ground station can transparently transmit signaling between the satellite and the core network. Alternatively, the ground station can serve as the base station for wireless communication, and the satellite can transparently transmit signaling between the terminal device and the ground station. For example, during communication, the ground station can send, to the satellite through a feedback link (or referred to as a feeder link) (feeder link), signaling that comes from the core network; and the satellite sends the signaling to the terminal device through a service link (service link) between the satellite and the terminal device. Correspondingly, the terminal device may alternatively send signaling to the satellite through the service link, and the satellite sends the signaling to the core network by using the ground station.

FIG. 1 shows only one satellite and only one ground station. During actual use, an architecture with a plurality of satellites and/or a plurality of ground stations can be used as required. Each satellite can provide a service to one or more terminal devices, each satellite can correspond to one or more ground stations, each ground station can correspond to one or more satellites, and so on. This is not specifically limited in this application. Based on the communication scenario shown in FIG. 1, in this embodiment of this application, an execution body that executes an information indication method may be the foregoing ground station, terminal, or satellite, and when the network device (the satellite or the ground station) serves as a transmit end to send data or information, the terminal may serve as a first communication apparatus to perform the information indication method provided in this application. Correspondingly, the network device serves as a second communication apparatus to perform a corresponding information indication method provided in this application.

In addition, it may be understood that different beams can be distinguished in a protocol based on a bandwidth part BWP, a transmission configuration indicator (transmission configuration indicator, TCI), or a synchronization signal and PBCH block (synchronization signal and PBCH block, SSB); or in other words, beams can be indicated based on a BWP, a TCI, or an SSB. For example, beam switching may be indicated between the terminal and the network device through switching of BWPs, TCIs, or SSBs, so that for the terminal and/or the network device, switching of the BWPs, the TCIs, or the SSBs may be actually performed. For example, each beam corresponds to one BWP. In other words, each beam corresponds to one bandwidth. When the UE performs BWP switching, beam switching is equivalently performed. Therefore, the beam described in this application can be alternatively replaced with the BWP, the TCI, or the SSB.

The related technologies of the solutions of this application are described below with reference to the accompanying drawings.

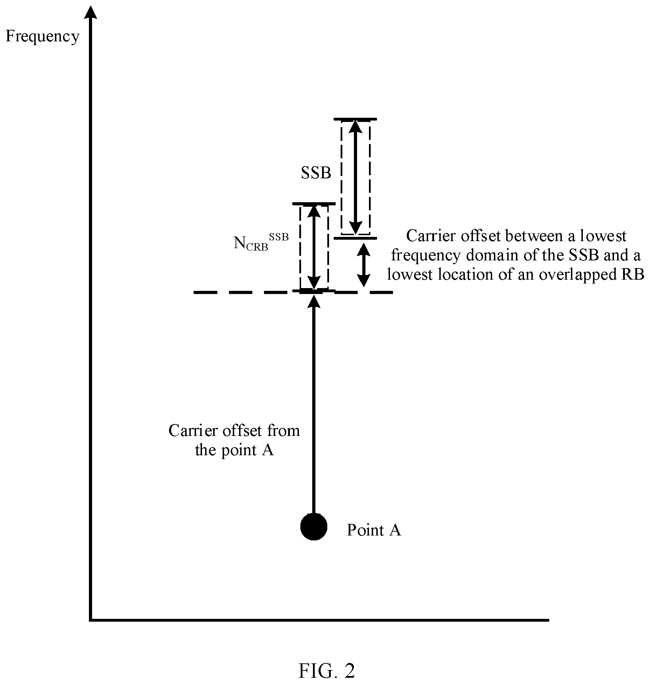

UE obtains a MIB and remaining minimum system information RMSI (Remaining Minimum System Information, RMSI) information by searching an SSB signal. Alternatively, the RMSI is referred to as a system information block SIB 1. In addition, as shown in a schematic diagram of a location relationship between an SSB and a point A provided in FIG. 2, a frequency-domain reference point point A (a point A) can be determined based on a location of the SSB in a frequency domain. Specifically, a location of the point A is obtained based on a value offsetToPointA of a subcarrier offset between a lowest frequency of the SSB and a lowest location of an overlapped resource block RB (resource block, RB). A carrier offset ssb-SubcarrierOffset between a lowest frequency domain of the SSB and the lowest location of the overlapped RB is carried in the MIB, and a subcarrier spacing is determined by a higher layer parameter common subcarrier spacing parameter subCarrierSpacingCommon (carried in the MIB), such as 15 kHz, 60 kHz, 30 kHz, or 120 kHz. A unit of the offset is RB. By default, for a frequency band FR1, a subcarrier spacing is 15 kHz; and for a frequency band FR2, a subcarrier spacing is 30 kHz.

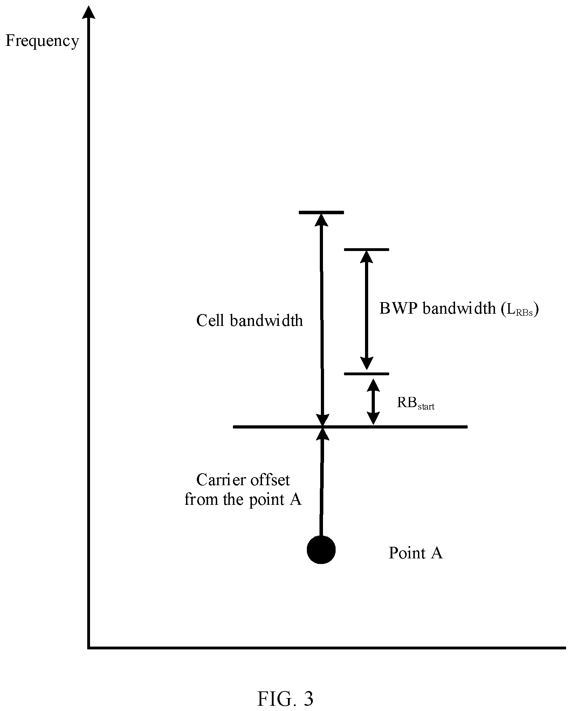

The UE obtains a parameter offsetToCarrier of an offset between a cell bandwidth and the point A by using the SIB 1 or RRC setup (RRCsetup) signaling. As shown in a schematic diagram of a relationship between an initial BWP frequency band and a point A in FIG. 3, the UE determines a starting location of the cell bandwidth based on the location of the point A and a value of offsetToCarrier. A unit of the offset is indicated by a subcarrier spacing subcarrierSpacing configured together with offsetToCarrier. For example, subcarrierSpacing represents 15 kHz or 30 kHz. A location and a bandwidth of an initial BWP are configured by using a location and bandwidth parameter LocationAndBandwidth, and may be configured by a base station for the UE by using the SIB 1 or RRC reconfiguration (RRC Reconfiguration) signaling. A value of LocationAndBandwidth ranges from 0 to 37949. The value is represented by a resource indicator value (resource indicator value, RIV). To be specific, a quantity of occupied RBs and an initial offset between an initial RB of the initial BWP and the cell bandwidth may be obtained by using the value. If a system works in frequency division duplex (FDD), the initial BWP includes an initial uplink BWP and an initial downlink BWP. If the system works in time division duplex (TDD), uplink transmission and downlink transmission are performed on a same initial BWP frequency band. A method for determining the location and the bandwidth of the initial BWP described below is applicable to the initial uplink BWP and the initial downlink BWP. Parameters RBₛₜₐᵣₜ and L_{RBs} are calculated by using the value of LocationAndBandwidth. As shown in FIG. 3, RBₛₜₐᵣₜ represents an offset from a starting location of the initial BWP frequency band to a starting location of a cell frequency band, and a unit of the offset is indicated by the parameter subcarrierSpacing configured together with LocationAndBandwidth. For example, subcarrierSpacing represents 15 kHz or 30 kHz. The UE may obtain the starting location of the initial BWP frequency band based on RBₛₜₐᵣₜ. The UE obtains the bandwidth of the initial BWP based on the parameter L_{RBs}, and a unit of the bandwidth is represented by the parameter subcarrierSpacing configured together with LocationAndBandwidth. The foregoing method for determining the location and bandwidth of the initial BWP is applicable to determining a location and a bandwidth of either of the initial downlink BWP and the initial uplink BWP.

If a network side does not configure a downlink frequency band location and a bandwidth of the initial BWP in the SIB 1, the RRC reconfiguration, or RRCsetup, by default, a location and a size of the initial downlink BWP are the same as those of a control resource set #0 CORESET#0 (Control Resource Set #0). In a random access stage, the UE sends a preamble (preamble) and a message 3 on the initial uplink BWP. The base station sends a message 2 and a message 4 to the UE on the initial downlink BWP.

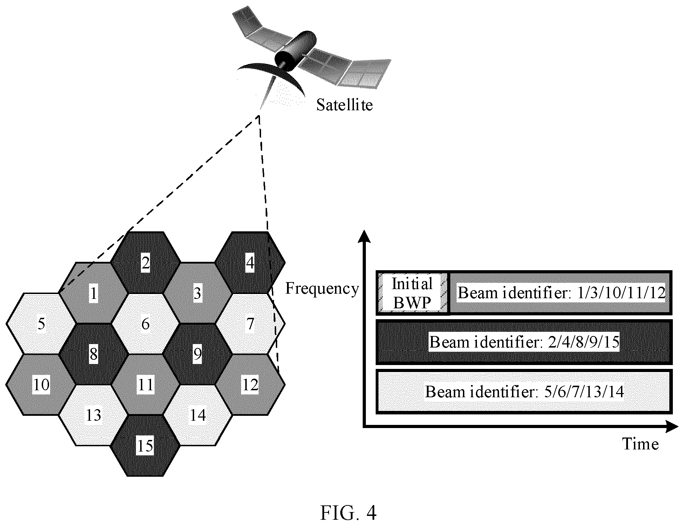

It can be learned from the foregoing descriptions that in an initial access stage, the network side may configure the location and the bandwidth of the initial BWP for the UE by using the MIB/SIB 1; and in an RRC connection stage, may configure the location and the bandwidth of the initial BWP for the UE by using the RRCsetup signaling or the RRC reconfiguration signaling. However, it is stipulated in an existing protocol that, regardless of where the initial BWP is configured, parameters need to be the same as the parameters of the initial BWP that are configured for the UE in the MIB/SIB 1. For example, in a satellite communication system, to avoid interference from an adjacent beam, a frequency reuse factor is usually set to be greater than 1. As shown in a schematic diagram of a satellite communication network with a frequency reuse factor of 3 in FIG. 4, it is assumed that one cell in an area covered by a satellite includes 15 beams, and a frequency reuse factor of the beams is 3. According to a protocol, initial BWPs of the beams need to be set in a same frequency band. When a terminal device is connected to the system from a beam in the cell, after beam switching occurs on the terminal device or the terminal device undergoes beam switching, if the terminal device is disconnected, the terminal device may be unable to apply on the initial BWP for connecting to the system. For example, it is assumed that the terminal device is connected to the system from a beam 1, the terminal device switches from the beam 1 to a beam 6 due to movement of the satellite. In this case, the terminal device undergoes communication interruption or disconnection for some reason (for example, poor channel quality), and needs to be re-connected to the system. However, no frequency band occupied by the initial BWP exists in a frequency band used by the beam 6, and the terminal device cannot apply for connecting to the system. The terminal device still cannot send a preamble on the initial BWP that is set by the system for connecting to the system.

With respect to the foregoing technical problem, the information indication method provided in embodiments of this application is described below in detail.

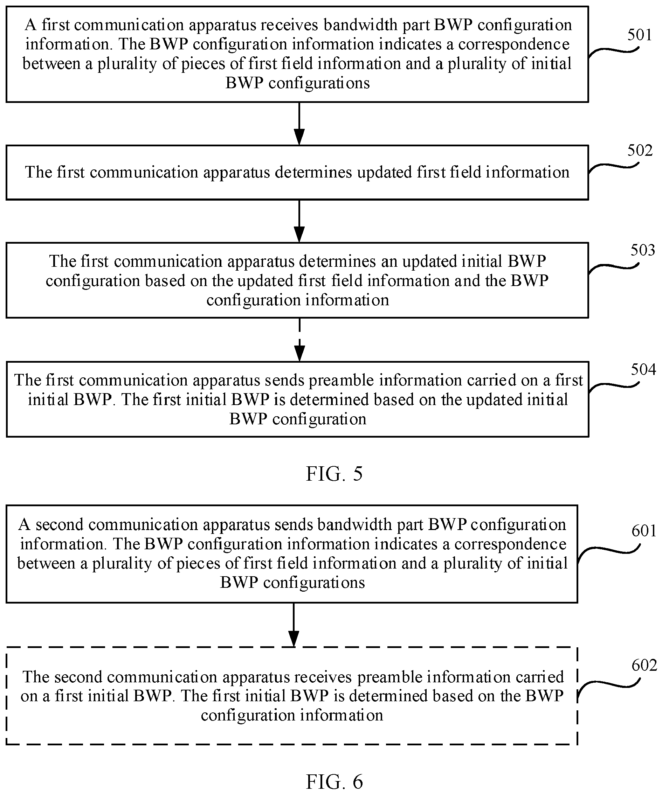

Based on the scenario of the wireless communication network shown in FIG. 1, FIG. 5 is a schematic diagram of an information indication method applicable to a non-terrestrial communication network according to an embodiment of this application, to resolve a technical problem that after a terminal apparatus undergoes beam switching, the terminal is disconnected and cannot send a preamble on an initial BWP to apply for connecting to a system. According to the solution, a mapping relationship between an initial BWP configuration and first field information such as frequency band information is established, and the mapping relationship is notified to a terminal device through broadcasting or the like. The terminal device updates a corresponding frequency band or a corresponding beam initial BWP configuration during frequency band switching or beam switching. This method is applied to the terminal device or a terminal chip.

A specific procedure is as follows:
Step 501: A first communication apparatus receives bandwidth part BWP configuration information. The BWP configuration information indicates a correspondence between a plurality of pieces of first field information and a plurality of initial BWP configurations.
Step 502: The first communication apparatus determines updated first field information.
Step 503: The first communication apparatus determines an updated initial BWP configuration based on the updated first field information and the BWP configuration information.

The first field information indicates different beams. Optionally, the first field information includes BWP frequency band information, a resource block parameter, a beam identifier, a synchronization signal block SSB number, or a transmission configuration indicator TCI. The updated first field information corresponds to the updated initial BWP configuration.

Optionally, the initial BWP configuration includes a BWP frequency domain location and a bandwidth parameter, or a carrier offset, or reference point information. The BWP frequency domain location and the bandwidth parameter are a starting frequency domain location of a BWP and a length of a frequency band occupied by the BWP. A group of configurations related to an initial BWP is received, such as a location and bandwidth parameter locationAndBandwidth and a carrier offset parameter offsetToCarrier, or an uplink point A configuration and/or a downlink point A configuration provided in embodiments of this application. For a specific form, refer to a subsequent specific embodiment, and the initial BWP configuration to be used is determined based on a beam or a BWP on which the first communication apparatus is located.

Optionally, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

Optionally, the updated first field information includes first field information after beam switching or first field information after BWP switching. It may be understood that the beam switching or the BWP switching described herein is essentially frequency band switching. Therefore, the equivalent statement of the frequency band switching also falls within the scope of this application.

Optionally, the frequency band information indirectly or directly indicates a quantity of frequency bands, and the quantity of frequency bands is equal to a frequency reuse factor.

Optionally, that the first communication apparatus determines updated first field information includes: The first communication apparatus determines the BWP frequency band information based on a used uplink frequency band range or a used downlink frequency band range.

Optionally, the method further includes: The first communication apparatus determines a frequency band location and a bandwidth parameter of an updated initial BWP based on the reference point information.

Optionally, after step 503, the method further includes step 504: The first communication apparatus sends preamble information carried on a first initial BWP. The first initial BWP is determined based on the updated initial BWP configuration.

Correspondingly, the following describes an information indication manner applied to a network device side, and a specific process may be shown in FIG. 6. For an implementation example of steps, refer to the example in the foregoing terminal implementation method. Same content is not repeated herein. The method is applied to a network device or a network device chip, which may be specifically a satellite, a ground station, or a communication chip installed on a satellite or a ground station.

A specific procedure is as follows:
Step 601: A second communication apparatus sends bandwidth part BWP configuration information. The BWP configuration information indicates a correspondence between a plurality of pieces of first field information and a plurality of initial BWP configurations.

The first field information indicates different beams. Optionally, the first field information includes BWP frequency band information, a resource block parameter, a beam identifier, a synchronization signal block SSB number, or a transmission configuration indicator TCI.

Optionally, the method further includes step 602: The second communication apparatus receives preamble information carried on a first initial BWP. The first initial BWP is determined based on the BWP configuration information.

Optionally, the initial BWP configuration includes a BWP frequency domain location and a bandwidth parameter, or a carrier offset, or reference point information.

Optionally, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

Optionally, the updated first field information includes first field information after beam switching or first field information after BWP switching.

Optionally, the frequency band information indirectly or directly indicates a quantity of frequency bands, and the quantity of frequency bands is equal to a frequency reuse factor.

Optionally, that the first communication apparatus determines updated first field information includes: The first communication apparatus determines the BWP frequency band information based on a used uplink frequency band range or a used downlink frequency band range.

Optionally, signaling (including a group of initial BWP configuration signaling, a correspondence between an initial BWP configuration and a frequency band, a correspondence between an initial BWP configuration and a beam identifier or a beam group, a group of point A configuration signaling, a correspondence between a point A configuration and a frequency band, a correspondence between a point A configuration and a beam identifier or a beam group, and the like) in each embodiment of this application may be included in at least one type of broadcast information such as a system information block (system information block, SIB) 1, other system information (other system information, OSI), and a master information block (master information block, MIB), and is sent by the network device to a terminal in unicast, broadcast, or multicast mode. In addition, if sending is performed in a radio resource control (radio resource control, RRC) connection stage, the network device may add the information to at least one type of the following information: RRC information, an RRC reconfiguration message, downlink control information (downlink control information, DCI), a group DCI, and a media access control (media access control, MAC) element (element), or transmit the information with data or send the information to UE on a separately allocated PDSCH bearer.

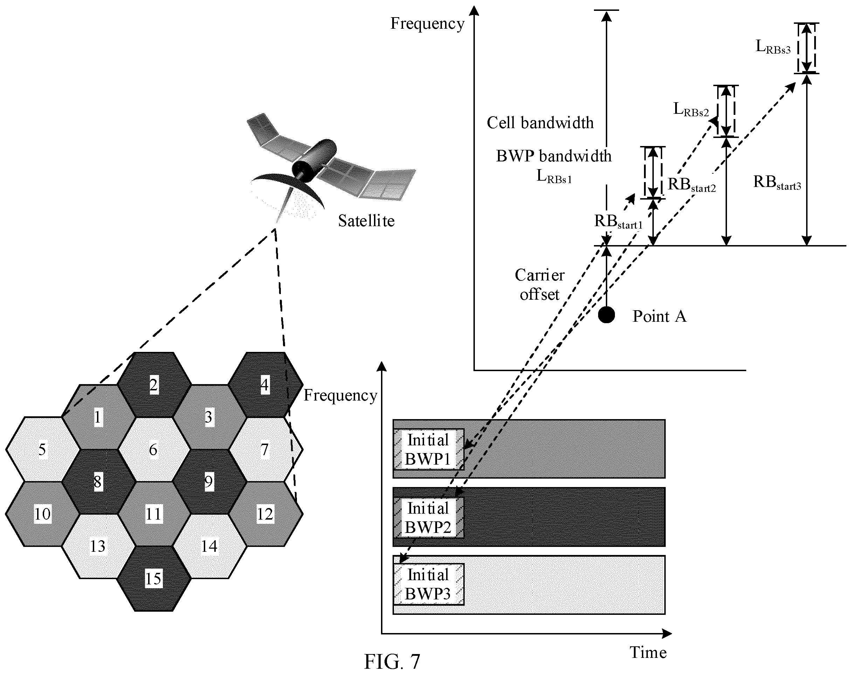

Specifically, FIG. 7 is a schematic diagram of an embodiment of an information indication method based on a relationship between a frequency band and an initial BWP configuration according to this application. In this embodiment, one cell in an area covered by a satellite includes 15 beams, and a frequency reuse factor of the beams is 3. The quantity of beams in the cell and the frequency reuse factor are only examples. It may be understood that the quantity of beams and the reuse factor may be alternatively other values. In this embodiment, the satellite sends a group of BWP configuration information to the UE. For specific content, refer to Table 1: correspondence between an initial BWP configuration and a frequency band range. The initial BWP configuration includes information, such as a location and bandwidth parameter locationAndBandwidth and an offset parameter offsetToCarrier. Each initial BWP configuration corresponds to a frequency band, and a quantity of frequency bands is related to the frequency reuse factor. For example, the quantity of frequency bands is equal to or has a functional relationship with the frequency reuse factor.

After undergoing beam switching or BWP switching, the UE updates an initial BWP configuration of a corresponding beam or BWP, and automatically switches to the corresponding initial BWP configuration. The UE may find corresponding initial BWP settings based on an uplink frequency band range or a downlink frequency band range being used. The initial BWP configuration may include an initial uplink BWP configuration and an initial downlink BWP configuration. The initial BWP settings include the parameter locationAndBandwidth, the parameter offsetToCarrier, and the like. As shown in FIG. 7, the satellite broadcasts the BWP configuration information, which includes three pairs of correspondences between initial BWP configurations and frequency band ranges. Three initial BWP configurations correspond to satellite beams with different frequency reuse factors. A mapping relationship between an initial BWP configuration and a corresponding frequency band is shown in an upper right part of FIG. 7. The UE obtains a location and a bandwidth of an initial BWP by using a parameter locationAndBandwidth and a parameter offsetToCarrier in an initial BWP configuration. When communication is interrupted after the UE undergoes beam switching, the UE may send, by using a frequency band of an initial uplink BWP configuration updated at this moment, a preamble to apply for connecting to a system, and re-establish a connection.

**Table 1: Correspondence between an initial BWP configuration and a frequency band range**

| Frequency band range | Initial BWP configuration (including locationAndBandwidth, offsetToCarrier, and the like) |
|---|---|
| Frequency band 1 | Initial BWP1 configuration |
| Frequency band 2 | Initial BWP2 configuration |
| Frequency band 3 | Initial BWP3 configuration |
| ... | ... |

Specifically, the satellite sends a group of initial BWP configurations to the UE, and each initial BWP configuration corresponds to a frequency band. In other words, after undergoing beam switching or BWP switching, the UE can automatically switch to a corresponding initial BWP configuration. A frequency band-related parameter of a dedicated BWP that is being used by the UE on a beam includes locationAndBandwidth. As shown in the upper right part of FIG. 7, the UE obtains a starting resource block parameter RBₛₜₐᵣₜ based on the parameter locationAndBandwidth, and obtains a starting location of the corresponding dedicated BWP based on the parameter RBₛₜₐᵣₜ. The UE may determine the corresponding initial BWP configuration based on a starting location of a BWP. For example, as shown in Table 2, the UE determines, based on a correspondence between an initial BWP configuration and an RBₛₜₐᵣₜ, an initial BWP configuration used by the UE.

**Table 2: Correspondence between an initial BWP configuration and an RBₛₜₐᵣₜ**

| RBₛₜₐᵣₜ | Initial BWP configuration (including locationAndBandwidth, offsetToCarrier, and the like) |
|---|---|
| 0 to 90 | Initial BWP1 configuration |
| 91 to 182 | Initial BWP2 configuration |
| 183 to 274 | Initial BWP3 configuration |
| ... | ... |

Specifically, from a perspective of implementation, this application further provides a design of a location and bandwidth group locationAndBandwidthGroup field. A location and bandwidth locationAndBandwidth is used to represent a frequency domain location and a width of an initial BWP, and the location and bandwidth group field is used to represent frequency domain locations and bandwidth parameters corresponding to a group of initial BWPs. For a code design of specific field content, refer to the following example, and locationAndBandwidthGroup includes locationAndBandwidth 1 (representing a location and a bandwidth parameter of an initial BWP 1), locationAndBandwidth 2 (representing a location and a bandwidth parameter of an initial BWP 2), locationAndBandwidth 3 (representing a location and a bandwidth parameter of an initial BWP 3), and the like. The location and bandwidth 1 (locationAndBandwidth 1) and the like have a correspondence with a frequency band on which a BWP used by the UE is located, for example, have a correspondence with the parameter RBₛₜₐᵣₜ. The UE selects the corresponding locationAndBandwidth 1, locationAndBandwidth 2, or the like based on the frequency band on which the used BWP is located.

This application further provides a design of a carrier offset group offsetToCarrierGroup field, a carrier offset offsetToCarrier is used to represent an offset between a minimum frequency band that can be used and a reference point point A, and a unit is a PRB (Physical resource block). The carrier offset group field is used to represent carrier offset parameters offsetToCarrier corresponding to a group of initial BWPs. For a code design of specific field content, refer to the following example, and offsetToCarrierGroup includes offsetToCarrier 1 (representing a carrier offset parameter of the initial BWP 1), offsetToCarrier 2 (representing a carrier offset parameter of the initial BWP 2), offsetToCarrier 3 (representing a location and a bandwidth parameter of the initial BWP 3), and the like. Optionally, a carrier offset parameter offsetToCarrier of each BWP configuration in a group of initial BWP configuration signaling configured by the base station for the UE may vary. The carrier offset 1 offsetToCarrier 1, the carrier offset 2 offsetToCarrier 2, and the like have a correspondence with the frequency band on which the BWP used by the UE is located, for example, have a correspondence with the parameter RBₛₜₐᵣₜ. The UE selects the corresponding offsetToCarrier 1, offsetToCarrier 2, or the like based on the frequency band on which the used BWP is located.

Reference of a related code design:

### BWP information element

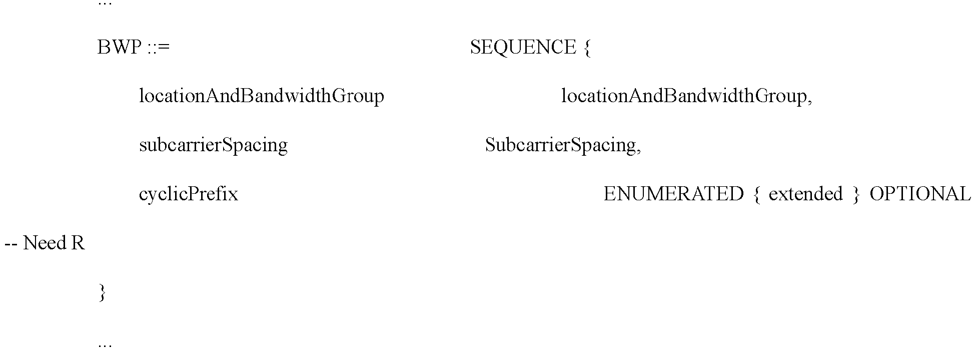

### locationAndBandwidthGroup information element

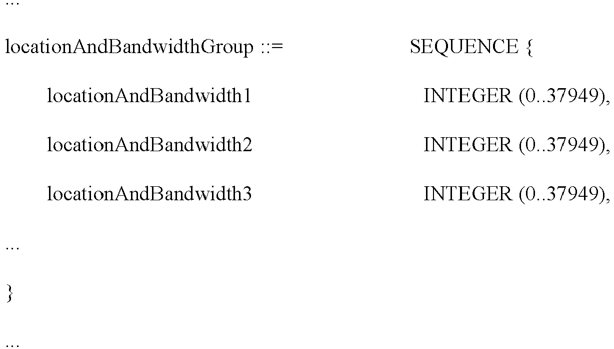

### SCS-SpecificCarrier information element

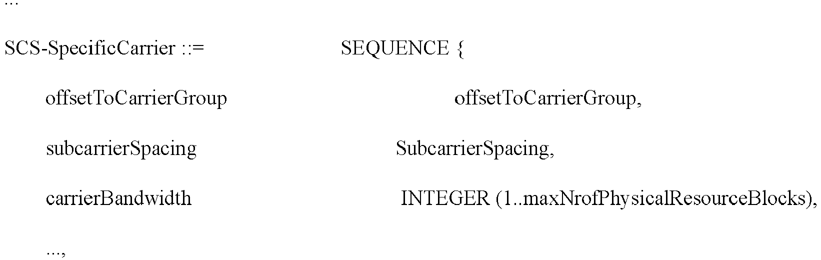

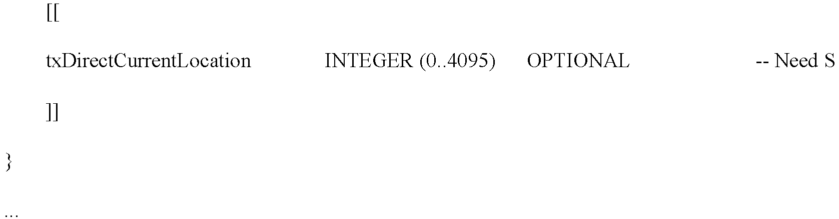

### offsetToCarrierGroup information element

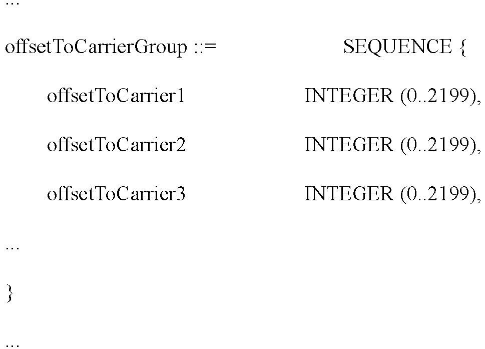

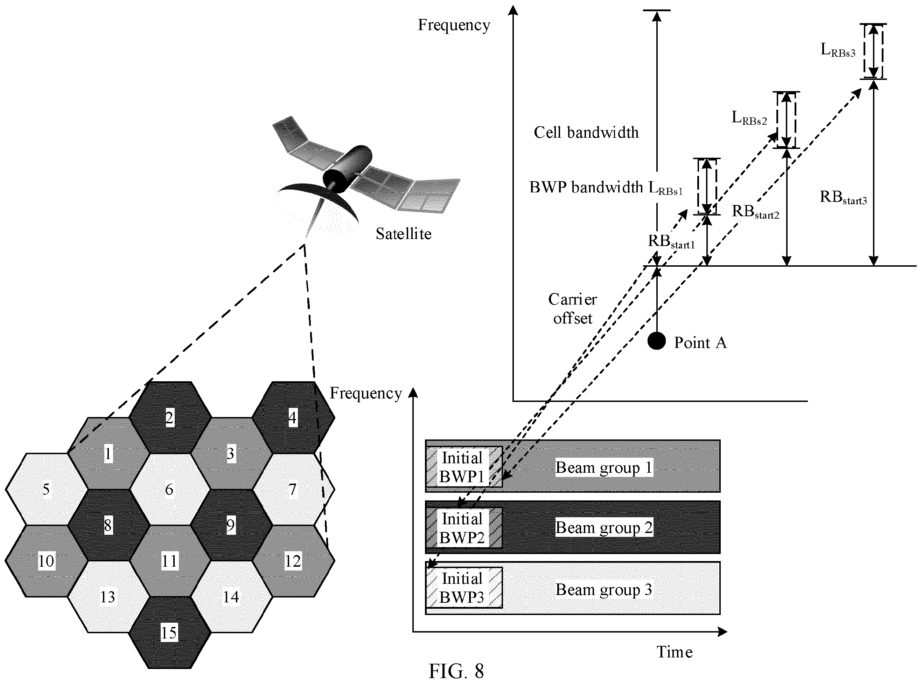

Specifically, FIG. 8 is a schematic diagram of an embodiment of an information indication method based on a relationship between a beam group and an initial BWP configuration according to this application. In this embodiment, one cell in an area covered by a satellite includes 15 beams, and a frequency reuse factor of the beams is 3. The quantity of beams in the cell and the frequency reuse factor are only examples. It may be understood that the quantity of beams and the reuse factor may be alternatively other values. In this embodiment, the satellite sends a group of BWP configuration information to UE. For specific content, refer to Table 3: correspondence between an initial BWP configuration and a beam group. The initial BWP configuration includes information, such as a location and bandwidth parameter locationAndBandwidth and an offset parameter offsetToCarrier. Each initial BWP configuration corresponds to a beam group or a beam identifier beam ID, and a quantity of beam groups is related to the frequency reuse factor. For example, the quantity of beam groups is equal to or has a functional relationship with the frequency reuse factor.

**Table 3: Correspondence between an initial BWP configuration and a beam group**

| Beam identifier Beam ID | Initial BWP configuration (including locationAndBandwidth, offsetToCarrier, and the like) |
|---|---|
| Beam group 1 | Initial BWP1 configuration |
| Beam group 2 | Initial BWP2 configuration |
| Beam group 3 | Initial BWP3 configuration |
| ... | ... |

The satellite sends a group of BWP configuration information (which may include information such as locationAndBandwidth and offsetToCarrier) to the UE. Each initial BWP configuration corresponds to a beam identifier or a beam group. Similarly, the initial BWP configuration may correspond to a BWP number, a TCI, or an SSB number, and the beam identifier is used as an example herein for description. After undergoing beam switching, the UE can use a corresponding initial BWP configuration based on a current beam identifier. As shown in Table 3, the UE may find corresponding initial BWP settings based on a beam identifier of a beam on which the UE is located. The initial BWP configuration may include an initial uplink BWP configuration and an initial downlink BWP configuration. Alternatively, the UE may find, based on a beam identifier, a beam group on which the UE is located and then find a corresponding initial BWP configuration. The initial BWP settings include the parameter locationAndBandwidth, the parameter offsetToCarrier, and the like. FIG. 8 shows a mapping relationship between an initial BWP configuration and a beam group. The location and the bandwidth of the initial BWP are obtained by using the parameter locationAndBandwidth and the parameter offsetToCarrier in the initial BWP configuration. As shown in FIG. 8, the satellite broadcasts the BWP configuration information, which includes three pairs of correspondences between initial BWP configurations and beam groups. Three initial BWP configurations correspond to satellite beams with different beam identifiers. A mapping relationship between an initial BWP configuration and a corresponding beam group is shown in FIG. 8. The UE obtains the location and the bandwidth of the initial BWP by using a parameter locationAndBandwidth and a parameter offsetToCarrier in the initial BWP configuration. When communication is interrupted after the UE undergoes beam switching, the UE may send, by using a frequency band of an initial uplink BWP configuration updated at this moment, a preamble to apply for connecting to a system, and re-establish a connection.

Specifically, the satellite sends a group of initial BWP configurations to the UE, and each initial BWP configuration corresponds to a beam identifier. For example, Table 4 shows a correspondence between an initial BWP configuration and a beam identifier. In other words, after the UE undergoes beam switching or BWP switching, the beam identifier changes and the UE can automatically switch to a corresponding initial BWP configuration based on the updated beam identifier. Similarly, a beam identifier can be replaced with an SSB number. The correspondence between a beam identifier and an initial BWP configuration is established. After undergoing beam switching, the UE determines, based on the latest beam identifier and the correspondence between an initial BWP configuration and a beam identifier, the initial BWP configuration used by the UE, thereby avoiding a re-connection failure of the UE when beam switching is performed and disconnection occurs.

**Table 4: Correspondence between an initial BWP configuration and a beam identifier**

| Beam identifier Beam ID | Initial BWP configuration (including locationAndBandwidth, offsetToCarrier, and the like) |
|---|---|
| 1/3/11/12/2010 | Initial BWP1 configuration |
| 2/4/8/9/15 | Initial BWP2 configuration |
| 5/6/7/13/14 | Initial BWP3 configuration |
| ... | ... |

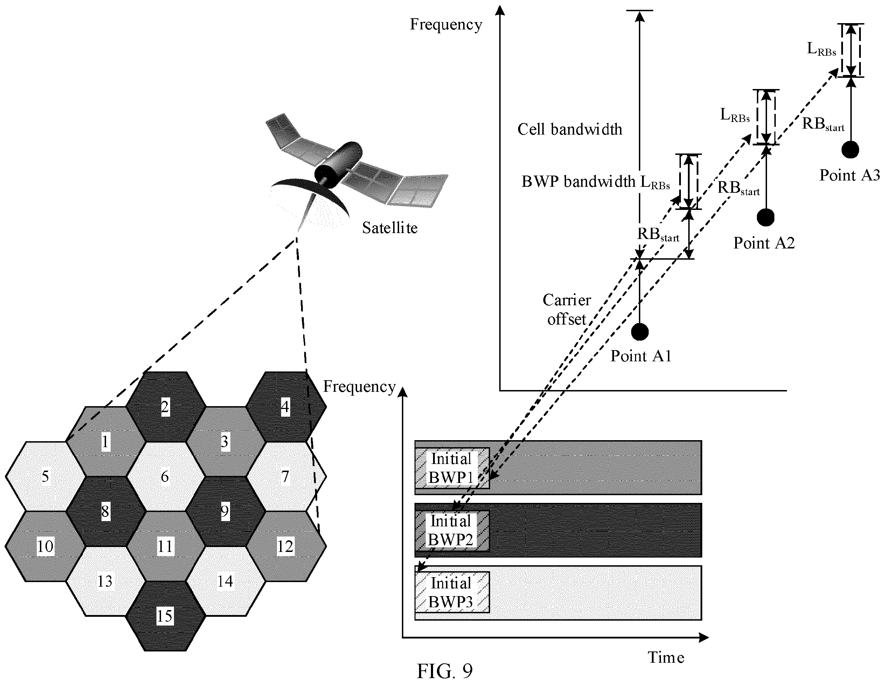

Specifically, FIG. 9 is a schematic diagram of an embodiment of an information indication method based on a relationship between a point A configuration and a frequency band range according to this application. In this embodiment, one cell in an area covered by a satellite includes 15 beams, and a frequency reuse factor of the beams is 3. The quantity of beams in the cell and the frequency reuse factor are only examples. It may be understood that the quantity of beams and the reuse factor may be alternatively other values. In this embodiment, the satellite sends a group of BWP configuration information to UE. For specific content, refer to Table 5: correspondence between a point A (a reference point of an initial BWP) configuration and a frequency band range. When configuring a point A point A for the UE, the satellite may configure a group of point A parameters. Each point A configuration may be divided into an uplink point A (corresponding to a reference point of an initial uplink BWP) configuration and a downlink point A (corresponding to a reference point of an initial downlink BWP) configuration, and the satellite may respectively set points A for an uplink and a downlink. Each point A configuration corresponds to a frequency band, and a quantity of frequency bands is related to the frequency reuse factor. For example, the quantity of frequency bands is equal to or has a functional relationship with the frequency reuse factor. After undergoing beam switching, the UE can automatically switch point A configurations based on a used frequency band. In this way, a frequency band location of the initial BWP is automatically changed. When communication is interrupted after the UE undergoes beam switching, the UE may send, by using a frequency band of an initial uplink BWP configuration updated at this moment, a preamble to apply for connecting to a system, and re-establish a connection. As shown in FIG. 9, in a schematic diagram of a mapping relationship between a point A configuration and a beam frequency band, the UE determines a location of the point A based on a frequency band used by a beam on which the UE is located after beam switching, to determine a location and a bandwidth of an initial BWP to be used. Optionally, a frequency domain location of a broadcast SSB in each beam is changed, and a location of a point A determined by the UE based on the frequency domain location of the SSB is also changed. In this way, an effect of adjusting the location of the point A in each beam can be achieved. In addition, the UE determines a starting location and a bandwidth of a frequency domain of the corresponding initial BWP based on the location of the point A.

**Table 5: Correspondence between a point A (a reference point) configuration and a frequency band range**

| Frequency band range | Point A configuration |
|---|---|
| Frequency band 1 | Point A1 configuration |
| Frequency band 2 | Point A2 configuration |
| Frequency band 3 | Point A3 configuration |
| ... | ... |

Specifically, the satellite sends BWP configuration information to the UE. For specific content, refer to Table 6: correspondence between a point A configuration and a frequency band range, to configure points A in different frequency band ranges. Each point A configuration corresponds to a frequency band. The point A configuration is determined based on an absolute frequency point absoluteFrequencyPoint. Therefore, different parameter values may be configured to indicate different point A parameters. After undergoing beam switching, the UE can automatically switch frequency band configurations of the initial BWP based on a used frequency band. For example, the UE can obtain a used point A parameter based on a frequency band range in which a data channel is located and the BWP configuration information, to obtain the starting location and the bandwidth of the initial BWP.

**Table 6: Correspondence between a point A (a reference point) configuration and a frequency band range**

| Frequency band range (GHz) | Point A configuration |
|---|---|
| 2.2 to 2.22 | Absolute frequency point A1 |
| 2.22 to 2.24 | Absolute frequency point A2 |
| 2.24 to 2.26 | Absolute frequency point A3 |
| ... | ... |

Specifically, from a perspective of implementation, this application further provides a design of an absolute frequency point A group absoluteFrequencyPointAGroup field of a reference resource block. An absolute frequency point A absoluteFrequencyPointA is used to represent that a subcarrier with a lowest frequency among absolute frequencies of the reference resource block is a point A, and an absolute frequency point A group of the reference resource block is used to represent a group of absolute frequency parameters of the point A. For a code design of specific field content, refer to the following example, and absoluteFrequencyPointAGroup includes absoluteFrequencyPointA1 (representing an absolute frequency of a point A of an initial BWP 1), absoluteFrequencyPointA2 (representing an absolute frequency of a point A of an initial BWP 2), absoluteFrequencyPointA3 (representing an absolute frequency of a point A of an initial BWP 3), and the like, and absoluteFrequencyPointA1 and the like have a correspondence with the frequency band on which the BWP used by the UE is located. The UE selects the corresponding absolute frequency point A1, absolute frequency point A2, or the like based on the frequency band on which the used BWP is located.

Reference of a related code design:

### Frequency InfoDL information element

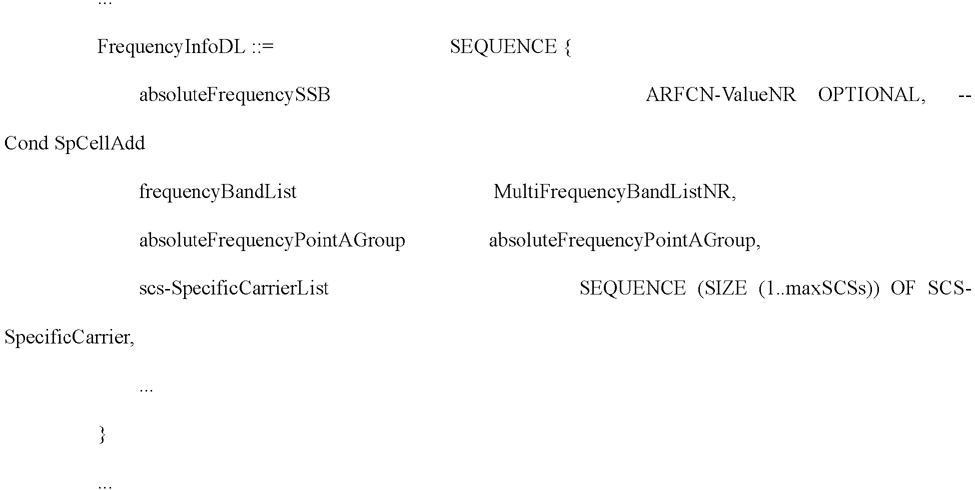

### locationAndBandwidthGroup information element

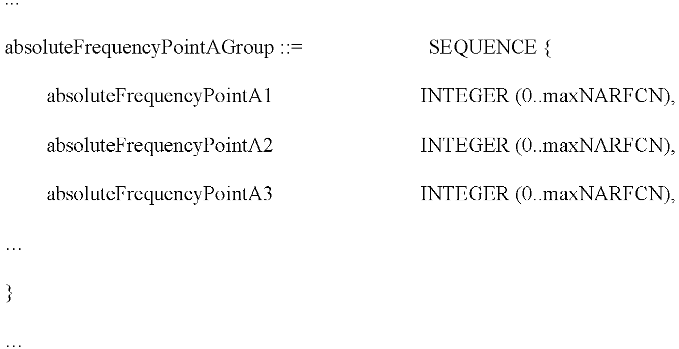

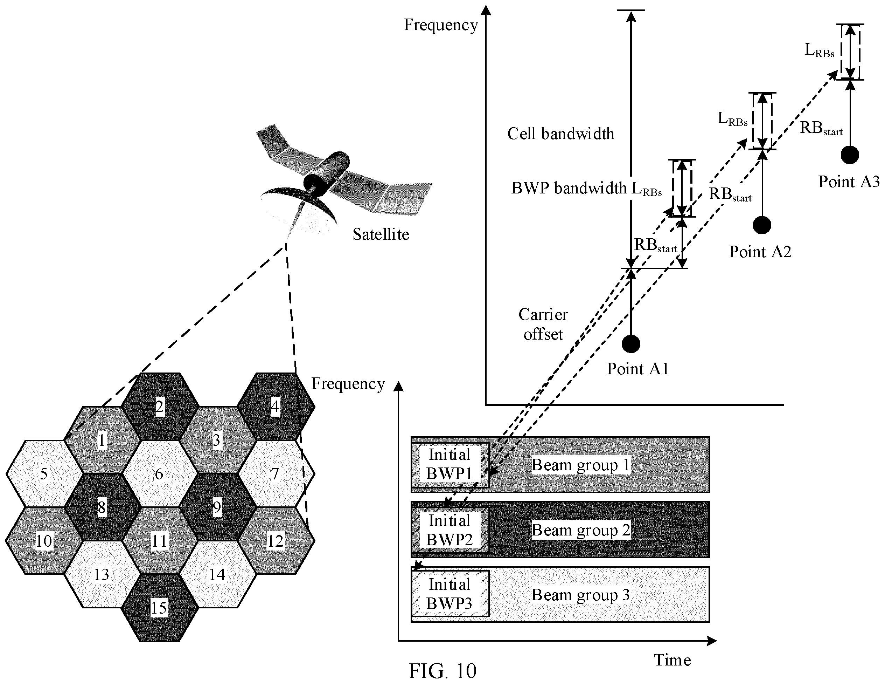

Specifically, FIG. 10 is a schematic diagram of an embodiment of an information indication method based on a relationship between a beam group and a point A configuration according to this application. In this embodiment, one cell in an area covered by a satellite includes 15 beams, and a frequency reuse factor of the beams is 3. The quantity of beams in the cell and the frequency reuse factor are only examples. It may be understood that the quantity of beams and the reuse factor may be alternatively other values. In this embodiment, the satellite sends BWP configuration information to UE, that is, point A configuration information. For specific content, refer to Table 7: correspondence between a point A configuration and a beam group. The point A configuration includes information, such as an uplink point A configuration and a downlink point A configuration. Each point A configuration corresponds to a beam group or a beam identifier, and a quantity of beam groups is related to the frequency reuse factor. For example, the quantity of beam groups is equal to or has a functional relationship with the frequency reuse factor. After undergoing beam switching, the UE can automatically switch point A configurations (a UL point A reference point and a DL point A reference point) based on a beam identifier or a beam group on which the UE is located. In this way, a frequency band location of an initial BWP is automatically changed. As shown in FIG. 10, in a schematic diagram of a mapping relationship between a point A location and a beam group, the UE determines the point A location based on the beam ID or the beam group on which the UE is located, to determine the location and a bandwidth of the initial BWP to be used.

**Table 7: Correspondence between a point A configuration and a beam group**

| Beam identifier Beam ID | Point A configuration |
|---|---|
| Beam group 1 | Point A1 configuration |
| Beam group 2 | Point A2 configuration |
| Beam group 3 | Point A3 configuration |
| ... | ... |

Specifically, the satellite sends the point A configuration information to UE, and each point A configuration corresponds to a beam identifier, for example, as shown in Table 8: correspondence between a point A configuration and a beam identifier. The point A configuration is determined based on a parameter absolute frequency point A. Therefore, different values of the parameter absoluteFrequencyPointA may be configured. In other words, after the UE undergoes beam switching or BWP switching, the beam identifier changes and the UE can automatically switch to a corresponding initial BWP configuration based on the updated beam identifier. The correspondence between a beam identifier and a point A configuration is established. After undergoing beam switching, the UE obtains a value of a used point A based on the latest beam identifier and the correspondence between a point A configuration and a beam identifier, to determine the starting location and the bandwidth of the frequency domain of the initial BWP, thereby avoiding a re-connection failure of the UE when beam switching is performed and disconnection occurs. Optionally, a frequency domain location of a broadcast SSB in each beam is changed, and a location of a point A determined by the UE based on the frequency domain location of the SSB is also changed. In this way, an effect of adjusting the location of the point A in each beam can be achieved. In addition, the UE determines a starting location and a bandwidth of a frequency domain of the corresponding initial BWP based on the location of the point A.

**Table 8: Correspondence between a point A configuration and a beam identifier**

| Beam identifier Beam ID | Point A configuration |
|---|---|
| 1/3/11/12/2010 | Absolute frequency point A1 |
| 2/4/8/9/15 | Absolute frequency point A2 |
| 5/6/7/13/14 | Absolute frequency point A3 |
| ... | ... |

The method provided in embodiments of this application is described above, and a communication apparatus for implementing the method in embodiments of this application is described below. The method and the apparatus are based on a same inventive concept. Because the method and the apparatus have a similar problem-resolving principle, for implementations of the apparatus and the method, refer to each other, and no repeated description is provided.

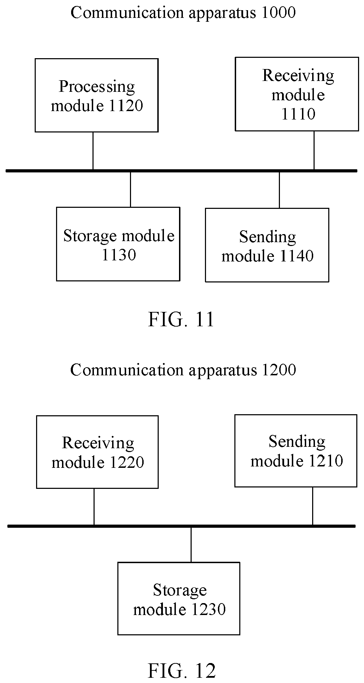

Based on the same technical concept as the information indication method and the embodiments of the information indication method, as shown in FIG. 11, a communication apparatus 1100 is provided. The communication apparatus 1100 can implement the various steps performed by the first communication apparatus or the terminal UE in the foregoing method. To avoid repetition, brief descriptions are provided herein. The communication apparatus 1100 may be a terminal device, for example, a handheld terminal, or may be a chip applied to a terminal device. The communication apparatus 1100 includes: a receiving module 1110 and a processing module 1120. Optionally, the communication apparatus 1100 further includes a storage module 1130. The processing module 1120 may be separately connected to the storage module 1130 and the receiving module 1110, and the storage module 1130 may also be connected to the receiving module 1110.

The storage module 1130 is configured to store a computer program, for example, to store BWP configuration information. The BWP configuration information may indicate a correspondence between a plurality of pieces of first field information and a plurality of initial BWP configurations.

For example, the receiving module 1110 is configured to obtain the bandwidth part BWP configuration information.

The processing module 1120 is configured to perform the information indication method and a signal processing function in the embodiments of the information indication method, for example, configured to determine updated first field information, or configured to determine an updated initial BWP configuration based on the updated first field information and the BWP configuration information.

Optionally, the processing module 1120 is specifically configured to determine BWP frequency band information based on a used uplink frequency band range or a used downlink frequency band range.

Optionally, the processing module 1120 is specifically configured to determine a frequency band location and a bandwidth parameter of an updated initial BWP based on reference point information.

Optionally, the communication apparatus 1100 further includes a sending module 1140. The sending module 1140 is configured to send preamble information carried on a first initial BWP. The first initial BWP is determined based on the updated initial BWP configuration.

Optionally, the initial BWP configuration includes a BWP frequency domain location and a bandwidth parameter, or a carrier offset, or reference point information.

Optionally, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

Optionally, the updated first field information includes first field information after beam switching or first field information after BWP switching.

Optionally, the frequency band information indirectly or directly indicates a quantity of frequency bands, and the quantity of frequency bands is equal to a frequency reuse factor.

Based on the same technical concept as the information indication method and the embodiments of the information indication method, as shown in FIG. 12, a communication apparatus 1200 is provided. The communication apparatus 1200 can implement the various steps performed by the second communication apparatus or the satellite in the foregoing method. To avoid repetition, brief descriptions are provided herein. The communication apparatus 1200 may be a network device, such as a satellite or a satellite base station, or may be a chip applied to a network device, for example, a modem chip. The communication apparatus 1200 includes: a sending module 1210 and a receiving module 1220. Optionally, the communication apparatus 1200 further includes a storage module 1230. The receiving module 1220 may be separately connected to the storage module 1230 and the sending module 1210, and the storage module 1230 may also be connected to the sending module 1210.

The storage module 1230 is configured to store a computer program, for example, to store BWP configuration information. The BWP configuration information indicates a correspondence between a plurality of pieces of first field information and a plurality of initial BWP configurations.

The sending module 1210 is configured to send bandwidth part BWP configuration information. The BWP configuration information indicates a correspondence between a plurality of pieces of first field information and a plurality of initial BWP configurations. The first field information is in a one-to-one correspondence with the initial BWP configurations, and includes BWP frequency band information, a resource block parameter, a beam identifier, or a synchronization signal block SSB number.

Optionally, the receiving module 1220 is configured to receive preamble information carried on a first initial BWP. The first initial BWP is determined based on the BWP configuration information.

Optionally, the initial BWP configuration includes a BWP frequency domain location and a bandwidth parameter, or a carrier offset, or reference point information.

Optionally, the plurality of first fields correspond to a plurality of different carrier offsets, or the plurality of first fields correspond to a plurality of different BWP frequency domain locations and a plurality of different bandwidth parameters, or the plurality of first fields correspond to a plurality of different pieces of reference point information.

Optionally, the updated first field information includes first field information after beam switching or first field information after BWP switching.

Optionally, the frequency band information indirectly or directly indicates a quantity of frequency bands, and the quantity of frequency bands is equal to a frequency reuse factor.

The terminal or the network device in this embodiment of this application may have some modules (or devices) implemented by hardware circuits and some other modules (or devices) implemented by software, or may have all modules (or devices) implemented by hardware circuits, or may have all modules (or devices) implemented by software.

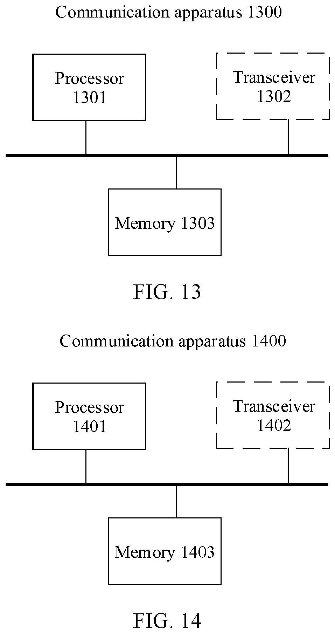

FIG. 13 is a schematic block diagram of a communication apparatus 1300 according to an embodiment of this application. It should be understood that the communication apparatus 1300 can perform the various steps performed by the first communication apparatus or the terminal UE. To avoid repetition, details are not described herein again. The communication apparatus 1300 includes a processor 1301 and a memory 1303. The processor 1301 and the memory 1303 are electrically coupled.

The memory 1303 is configured to store computer program instructions.

The processor 1301 is configured to execute some or all of the computer program instructions in the memory. When some or all of the computer program instructions are executed, the apparatus performs the various steps performed by the first communication apparatus or the terminal UE in the foregoing method.

Optionally, the communication apparatus 1300 further includes a transceiver 1302, configured to communicate with another device, for example, receive indication information sent by a network device.

It should be understood that the communication apparatus 1300 shown in FIG. 13 may be a chip or a circuit, for example, a chip or a circuit that can be disposed within a terminal device. The transceiver 1302 may be alternatively a communication interface. The transceiver includes a receiver and a transmitter. Further, the communication apparatus 1300 may further include a bus system.

The processor 1301, the memory 1303, and the transceiver 1302 are connected by using a bus system. The processor 1301 is configured to execute the instructions stored in the memory 1303, to control the transceiver to receive a signal and to send a signal, thereby completing the steps performed by the first communication apparatus or the terminal UE in the method in this application. The memory 1303 may be integrated in the processor 1301, or the memory 1303 and the processor 1301 may be separately disposed.

In an implementation, it may be considered that a function of the transceiver 1302 is implemented by a transceiver circuit or a dedicated transceiver chip. It may be considered that the processor 1301 is implemented by using a dedicated processing chip, a processing circuit, a processor, or a general-purpose chip.

FIG. 14 is a schematic block diagram of another communication apparatus 1400 according to an embodiment of this application. It should be understood that the communication apparatus 1400 can perform the various steps performed by the second communication apparatus or the network device. To avoid repetition, details are not described herein again. The communication apparatus 1400 includes a processor 1401 and a memory 1403. The processor 1401 and the memory 1403 are electrically coupled.

The memory 1403 is configured to store computer program instructions.

The processor 1401 is configured to execute some or all of the computer program instructions in the memory. When some or all of the computer program instructions are executed, the apparatus is enabled to perform the various steps performed by the second communication apparatus or the network device in the foregoing method.

Optionally, the communication apparatus 1400 further includes a transceiver 1402, configured to communicate with another device, for example, send indication information to a first communication apparatus or terminal UE.

It should be understood that the communication apparatus 1400 shown in FIG. 14 may be a chip or a circuit, for example, a chip or a circuit that can be disposed within the second communication apparatus or the network device. The transceiver 1402 may be alternatively a communication interface. The transceiver includes a receiver and a transmitter. Further, the communication apparatus 1400 may further include a bus system.

The processor 1401, the memory 1403, and the transceiver 1402 are connected by using the bus system. The processor 1401 is configured to execute the instructions stored in the memory 1403, to control the transceiver to receive a signal and to send a signal, thereby completing the steps performed by the network device in the communication method in this application. The memory 1403 may be integrated in the processor 1401, or may be coupled to the processor 1401.

In an implementation, it may be considered that a function of the transceiver 1402 is implemented by a transceiver circuit or a dedicated transceiver chip. It may be considered that the processor 1401 is implemented by using a dedicated processing chip, a processing circuit, a processor, or a general-purpose chip.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL) and another programmable logic device, discrete gate or transistor logic device, discrete hardware components, or any combination thereof. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM) and is used as an external cache. Through example but not limitative description, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this specification is intended to include but not limited to these memories and any memory of another appropriate type.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. An information indication method, comprising:
receiving, by a first communication apparatus, bandwidth part BWP configuration information, wherein the BWP configuration information indicates a correspondence between a plurality of pieces of first field information and a plurality of initial BWP configurations, and the first field information indicates different beams;
determining, by the first communication apparatus, updated first field information; and
determining, by the first communication apparatus, an updated initial BWP configuration based on the updated first field information and the BWP configuration information, wherein the updated first field information corresponds to the updated initial BWP configuration.

2. The method according to claim 1, wherein the initial BWP configuration comprises a BWP frequency domain location and a bandwidth parameter, or a carrier offset, or reference point information.

3. The method according to claim 2, wherein
the plurality of first fields correspond to a plurality of different carrier offsets; or
the plurality of first fields correspond to a plurality of different BWP frequency domain locations and a plurality of different bandwidth parameters; or
the plurality of first fields correspond to a plurality of different pieces of reference point information.

4. The method according to any one of claims 1 to 3, wherein the updated first field information comprises first field information after beam switching or first field information after BWP switching.

5. The method according to claim 2 or 3, wherein the frequency band information indirectly or directly indicates a quantity of frequency bands, and the quantity of frequency bands is equal to a frequency reuse factor.

6. The method according to any one of claims 1 to 5, wherein the determining, by the first communication apparatus, updated first field information comprises:
determining, by the first communication apparatus, the BWP frequency band information based on a used uplink frequency band range or a used downlink frequency band range.

7. The method according to any one of claims 2 to 6, further comprising:
determining, by the first communication apparatus, a frequency band location and a bandwidth parameter of an updated initial BWP based on the reference point information.

8. The method according to any one of claims 1 to 7, further comprising:
sending, by the first communication apparatus, preamble information carried on a first initial BWP, wherein the first initial BWP is determined based on the updated initial BWP configuration.

9. The method according to any one of claims 1 to 8, wherein the first field information comprises BWP frequency band information, a resource block parameter, a beam identifier, a synchronization signal block SSB number, or a transmission configuration indicator TCI.

10. An information indication method, comprising:
sending, by a second communication apparatus, bandwidth part BWP configuration information, wherein the BWP configuration information indicates a correspondence between a plurality of pieces of first field information and a plurality of initial BWP configurations; and the first field information is in a one-to-one correspondence with the initial BWP configurations, and indicates different beams.

11. The method according to claim 10, further comprising:
receiving, by the second communication apparatus, preamble information carried on a first initial BWP, wherein the first initial BWP is determined based on the BWP configuration information.

12. The method according to claim 11, wherein the initial BWP configuration comprises a BWP frequency domain location and a bandwidth parameter, or a carrier offset, or reference point information.

13. The method according to claim 12, wherein
the plurality of first fields correspond to a plurality of different carrier offsets; or
the plurality of first fields correspond to a plurality of different BWP frequency domain locations and a plurality of different bandwidth parameters; or
the plurality of first fields correspond to a plurality of different pieces of reference point information.

14. The method according to any one of claims 10 to 13, wherein the updated first field information comprises first field information after beam switching or first field information after BWP switching.

15. The method according to claim 12 or 13, wherein the frequency band information indirectly or directly indicates a quantity of frequency bands, and the quantity of frequency bands is equal to a frequency reuse factor.

16. The method according to any one of claims 10 to 15, wherein the first field information comprises BWP frequency band information, a resource block parameter, a beam identifier, a synchronization signal block SSB number, or a transmission configuration indicator TCI.

17. A communication apparatus, wherein the apparatus comprises a processor and a memory, and the processor and the memory are electrically coupled;
the memory is configured to store computer program instructions; and
the processor is configured to execute some or all of the computer program instructions in the memory, wherein when the some or all of the computer program instructions are executed, the information indication method according to any one of claims 1 to 9 is performed, or the information indication method according to any one of claims 10 to 16 is performed.

18. The communication apparatus according to claim 17, further comprising:
a transceiver, configured to send a signal processed by the processor, or receive a signal and input the signal to the processor

19. A computer-readable storage medium, wherein the computer storage medium stores computer-readable instructions; and when a computer reads and executes the computer-readable instructions, the method according to any one of claims 1 to 9 or the method according to any one of claims 10 to 16 is performed.

20. A communication apparatus, comprising:
a receiving module, configured to receive bandwidth part BWP configuration information, wherein the BWP configuration information indicates a correspondence between a plurality of pieces of first field information and a plurality of initial BWP configurations, and the first field information indicates different beams; and
a processing module, configured to determine updated first field information; and determine an updated initial BWP configuration based on the updated first field information and the BWP configuration information, wherein the updated first field information corresponds to the updated initial BWP configuration.

21. The apparatus according to claim 20, wherein the initial BWP configuration comprises a BWP frequency domain location and a bandwidth parameter, or a carrier offset, or reference point information.

22. The apparatus according to claim 21, wherein
the plurality of first fields correspond to a plurality of different carrier offsets; or
the plurality of first fields correspond to a plurality of different BWP frequency domain locations and a plurality of different bandwidth parameters; or
the plurality of first fields correspond to a plurality of different pieces of reference point information.

23. The apparatus according to any one of claims 20 to 22, wherein the updated first field information comprises first field information after beam switching or first field information after BWP switching.

24. The apparatus according to claim 21 or 22, wherein the frequency band information indirectly or directly indicates a quantity of frequency bands, and the quantity of frequency bands is equal to a frequency reuse factor.

25. The apparatus according to any one of claims 20 to 24, the processing module is specifically to determine the BWP frequency band information based on a used uplink frequency band range or a used downlink frequency band range

26. The apparatus according to any one of claims 21 to 25, the processing module is further to determine, by the first communication apparatus, a frequency band location and a bandwidth parameter of an updated initial BWP based on the reference point information.

27. The apparatus according to any one of claims 20 to 26, further comprising:
a sending module, configured to send preamble information carried on a first initial BWP, wherein the first initial BWP is determined based on the updated initial BWP configuration.

28. The apparatus according to any one of claims 20 to 27, wherein the first field information comprises BWP frequency band information, a resource block parameter, a beam identifier, a synchronization signal block SSB number, or a transmission configuration indicator TCI.

29. A communication apparatus, comprising:
a sending module, configured to send bandwidth part BWP configuration information, wherein the BWP configuration information indicates a correspondence between a plurality of pieces of first field information and a plurality of initial BWP configurations; and the first field information is in a one-to-one correspondence with the initial BWP configurations, and indicates different beams.

30. The apparatus according to claim 29, wherein
a receiving module, configured to receive preamble information carried on a first initial BWP, wherein the first initial BWP is determined based on the BWP configuration information.

31. The method according to claim 29 or 30, wherein the initial BWP configuration comprises a BWP frequency domain location and a bandwidth parameter, or a carrier offset, or reference point information.

32. The apparatus according to claim 31, wherein
the plurality of first fields correspond to a plurality of different carrier offsets; or
the plurality of first fields correspond to a plurality of different BWP frequency domain locations and a plurality of different bandwidth parameters; or
the plurality of first fields correspond to a plurality of different pieces of reference point information.

33. The apparatus according to any one of claims 29 to 32, wherein the updated first field information comprises first field information after beam switching or first field information after BWP switching.

34. The apparatus according to claim 31 or 32, wherein the frequency band information indirectly or directly indicates a quantity of frequency bands, and the quantity of frequency bands is equal to a frequency reuse factor.

35. The apparatus according to any one of claims 29 to 34, wherein the first field information comprises BWP frequency band information, a resource block parameter, a beam identifier, a synchronization signal block SSB number, or a transmission configuration indicator TCI.

36. A computer program product comprising instructions, wherein when the computer program product is executed on a computer, the method according to any one of claims 1 to 9 or the method according to any one of claims 10 to 16 is performed.

37. A communication system, comprising the apparatus according to any one of claims 20 to 28 and the apparatus according to any one of claims 29 to 35.
